# EUROPEAN PATENT SPECIFICATION

(11) **EP 2 105 642 B1**
(45) Date of publication and mention of the grant of the patent: **26.01.2011**
(21) Application number: 08153576.7
(22) Date of filing: 28.03.2008
(51) Int. Cl.: F16L 3/10, F16L 3/22

(54) **Pipe clamp**
Rohrschelle
Collier de serrage

(43) Date of publication of application: 30.09.2009
(73) Proprietor: Purus AB, 275 31 Sjöbo (SE)
(72) Inventor: Eklund, Conny, 280 70 Lönsboda (SE)
(74) Representative: VALEA AB

(56) References cited:
- US-A- 5 029 782
- PURUS: "Inomhusavlopp" 19 June 2002 (2002-06-19), PURUS , XP002502999 Retrieved from the Internet: URL:http://www2.purus.se/?id=617> * sentence 1 * & PURUS: "Purusklamman och tillbehör" 19 June 2002 (2002-06-19), AB SJÖBO BRUK Retrieved from the Internet: URL:http://www2.purus.se/filearchive/4/467 /tillbehör%20purusklamman.pdf> * page 7 * & PURUS: "Purusklamman" 19 June 2002 (2002-06-19), AB SJÖBO BRUK Retrieved from the Internet: URL:http://www2.purus.se/filearchive/5/502 /purusklamman.pdf> * the whole document *

## Description

### Background of invention.

The present invention relates to a pipe clamp, comprising a clamp member which is suitable to be mounted on a support and a lock or cover member which can be located over the clamp member, wherein the clamp member includes a base plate and at least one pair of clamping portions which cooperate with each other for clamping a pipe which is insertable between said clamping portions and locking said pipe to said support, wherein the clamping portions are designed pivotable in a direction away from each other by the pipe during the insertion thereof between the clamping portions and, after the insertion of the pipe, pivotable in a direction back towards the original position for clamping the pipe therebetween, wherein the clamping portions are provided at the base plate offset relative to each other seen in a direction substantially perpendicular to the pivoting direction of the clamping portions, and wherein the clamping portions are provided at the base plate with fastening portions or parts of fastening portions therefore located substantially opposite to each other seen in a direction substantially perpendicular to the pivoting direction of the clamping portions.

US 5 029 782 A discloses a two-part pipe bracket substantially as defined above.

A drawback at this and other prior art pipe clamps is that the clamping effect of the clamping portions is not optimized and the clamping portions do not allow mounting of pipes of any substantial range of various dimensions.

### Summary of the invention.

The object of the present invention is consequently to provide primarily a pipe clamp which allow mounting of pipes of a substantial range of various dimensions and which provides an effective and long lasting clamping effect without risking that the pipes clamped by means of the pipe clamp loosen, and secondly, provide a pipe clamp which further improves the clamping and locking effect of the clamping portions.

This is arrived at according to the invention while the fastening portions for the clamping portions are each located at an edge of a recess in the base plate in order to facilitate pivoting of the clamping portions in a direction away from each other by deflection downwards into said recesses, and while an end portion for each clamping portion is designed to cooperate with a wall portion of the lock or cover member when said lock or cover member is located over the clamp member in order to prevent pivoting of the clamping portions in a direction away from each other.

The above and other characterizing features of the invention as well as the advantages therewith will be further described below with reference to the accompanying drawings.

### Description of the drawings.

Fig. 1 is a schematic perspective view of the clamp member of the pipe clamp according to the present invention.
Fig. 2 is a schematic perspective view of a clamping portion with associated fastening and end portions for the clamp member according to fig. 1.
Fig. 3 is a schematic view illustrating the clamping portion with associated fastening and end portions according to fig. 2 in various positions depending on the dimension of a pipe.
Fig. 4 is a schematic perspective view of the lock or cover member of the pipe clamp according to the present invention.
Fig. 5 is a schematic perspective and partly sectional view of the clamp member and lock or cover member of the pipe clamp according to the present invention put together.

### Detailed description of a preferred embodiment of the invention

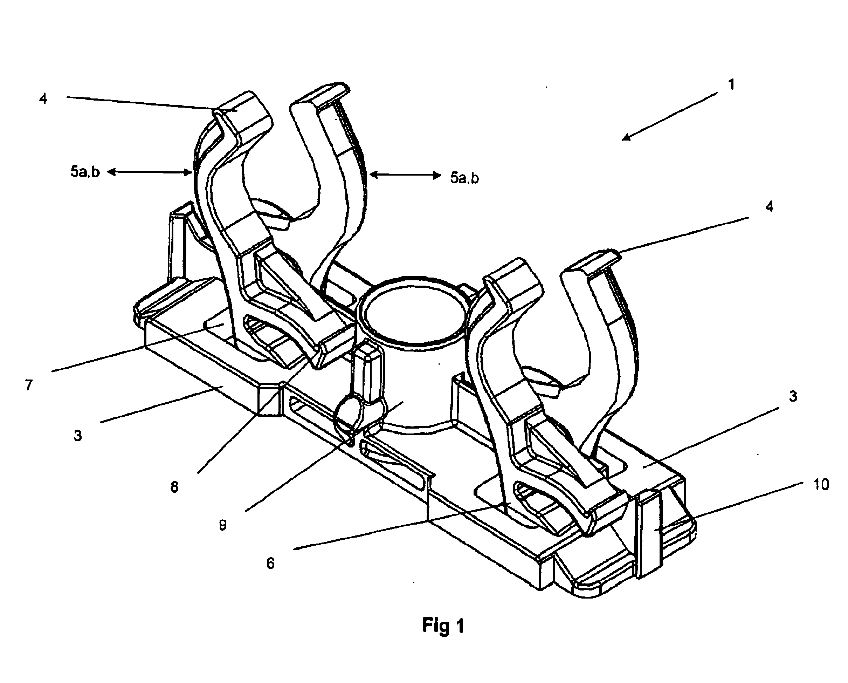

Thus, fig. 1-5 illustrate a preferred embodiment of the clamp member 1 and the lock or cover member 13 of a pipe clamp according to the present invention.

Fig. 1 illustrates the clamp member 1 which is suitable for mounting on a support (not shown). The clamp member 1 includes a base plate 3 which here has four sides and at least one pair of clamping portions 4. These clamping portions 4 cooperate with each other for clamping a pipe 15 which is insertable between said clamping portions 4. Hereby, the pipe 15 will get locked to the support, which is made possible by designing the clamping portions 4 to be pivotable in a direction away 5a from each other. Accordingly, when a pipe 15 is inserted, the clamping portions 4 will pivot in a direction away 5a from each other and after the insertion pivotably move back 5b in the direction towards the original position. Thereby, the pipe 15 will be clamped between the clamping portions 4.

Thus, according to one embodiment of the invention, the clamping portions 4 are provided at the base plate 3 with fastening portions or parts of fastening portions 6. These fastening portions or parts of fastening portions 6 are located substantially opposite to each other seen in a direction substantially perpendicular to the pivoting direction of said clamping portions 4. By locating the fastening portions or parts of the fastening portions 6 substantially opposite to each other as defined, the clamping effect of the clamping portions 4 about a pipe 15 inserted therebetween is optimized and durable.

According to another embodiment of the invention, the clamp member 1 includes two pairs of clamping portions 4 for clamping a pipe 15 between each pair of clamping portions 4. However, this should not be seen as a limit regarding the amount of pairs of clamping portions 4.

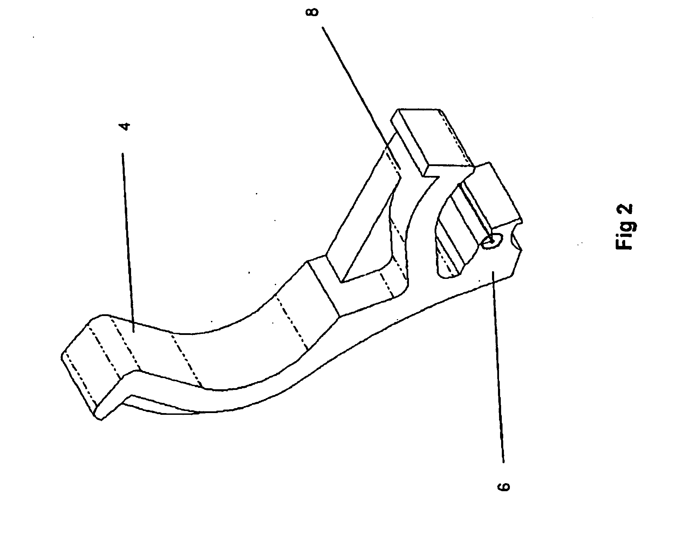

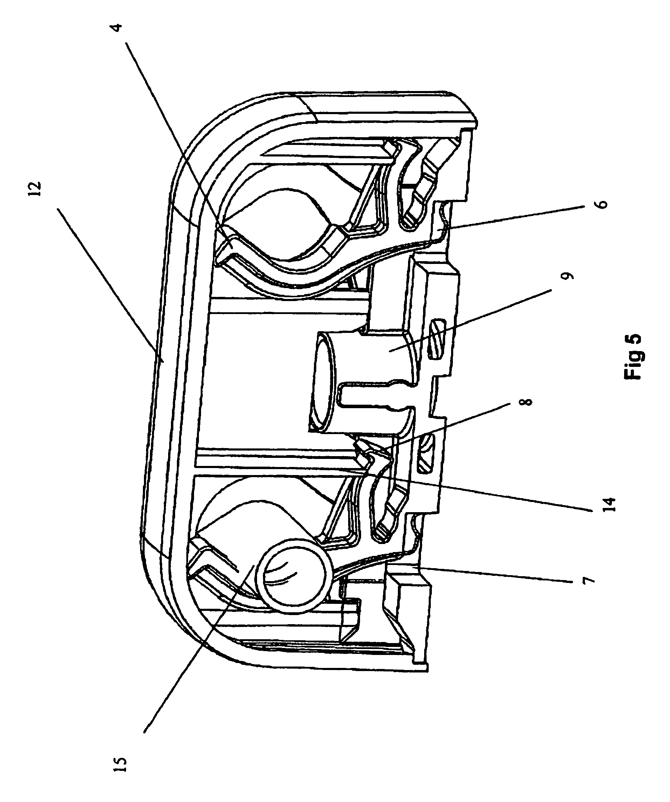

An end portion 8 of each clamping portion 4 as illustrated by fig. 2 is designed to cooperate with a wall portion 14 of the lock or cover member 12 (see fig. 5) when the lock or cover member 12 is located over the clamp member 1. In this way, said wall portions 14 of the lock or cover member 12 prevent the clamping portions 4 from pivoting in a direction away from each other, and will thereby improve the clamping effect of the clamping portions 4. Said wall portions 14 might even press the clamping portions 4, through said end portions 8, towards each other, thereby further improving the clamping force about a pipe 15 between the clamping portions 4.

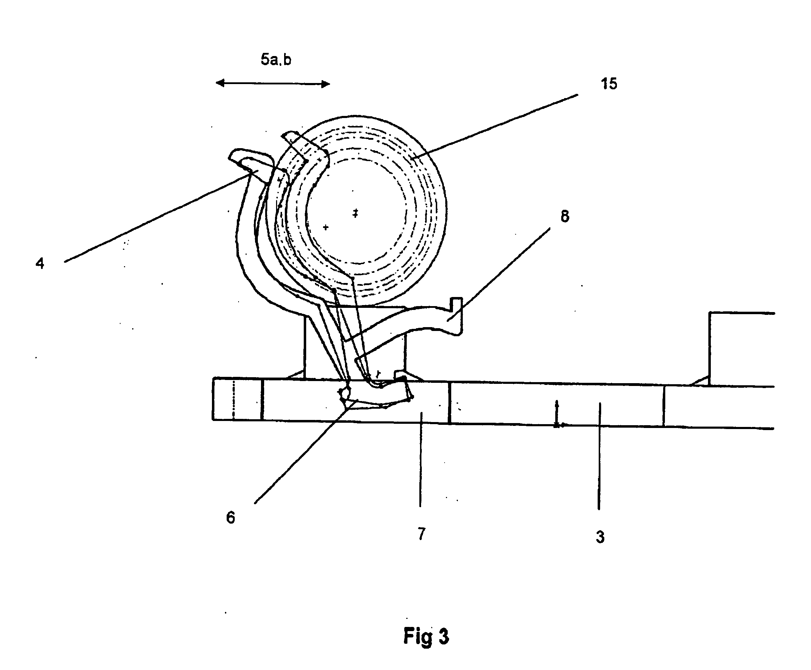

As illustrated by fig 2, the end portion 8 for each clamping portion 4 is provided between the clamping portion 4 and the fastening portion 6 and interconnects these portions. Further it extends substantially in parallel with the base plate 3 such that the end portion 8, when pivoting the clamping portions 4 in a direction away 5a from each other, moves in a direction upwards from the base plate 3. This is illustrated in fig. 3.

The fastening portions 6 for the clamping portions 4 are each located at an edge of a recess 7 in the base plate 3, illustrated by fig 1 and 3. This will facilitate pivoting of the clamping portions 4 in a direction away 5a from each other by deflection downwards into the recesses 7. Further, such as how the pair of clamping portions 4 are provided render the possibility of having different dimensions of the pipe 15.

Fig 1 illustrates a mounting portion 9 for a mounting means, e.g. a screw (not illustrated), for mounting the clamp member 1 on the support. Said mounting portion 9 is in the illustrated embodiment provided on the base plate 3 between the two pairs of clamping portions 4. Further, fig. 1 illustrates locking means 10 on the clamp member 1 which are provided on two opposite sides of the base plate 3 and on at least one side of the mounting portion 9 for a mounting means on the base plate 3.

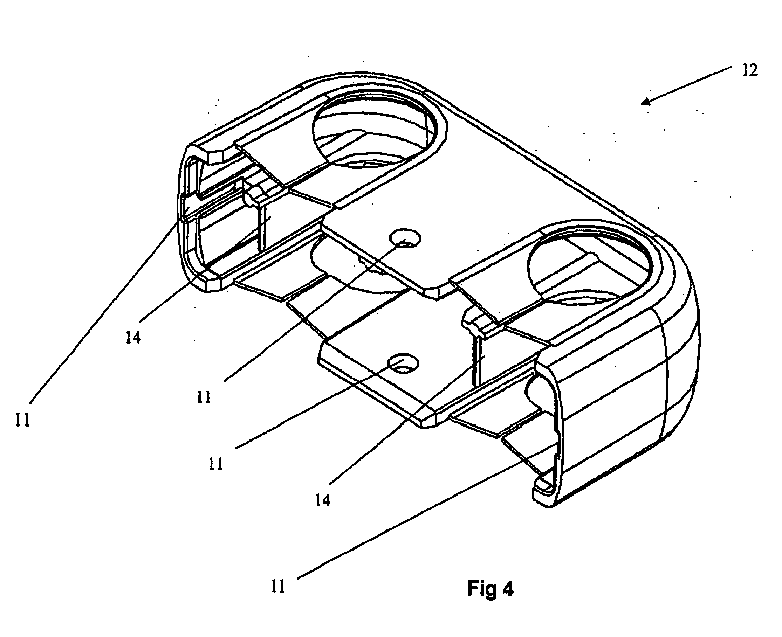

The locking means 10 of the clamp member 1 cooperate with locking means 11 on the lock and cover member 12 for location of the lock and cover member 12 over the clamp member 1, as illustrated by fig 4.

Further as illustrated by Fig 4 and 5, when locating the lock and cover member 12 over the clamp member 1, the wall portions 14 of the lock and cover member 12, prevent the end portions 8 to the clamping portions 4 from moving in a direction upwards from the base plate 3.

It is obvious to a skilled person that pipe clamp as described above can be modified within the scope of the subsequent claims without departing from the idea of the present invention. Thus, the various members of the pipe clamp as well as the various portions and means of each member may vary in number, location and construction.

## Claims

1. Pipe clamp, comprising a clamp member (1) which is suitable to be mounted on a support and a lock or cover member (12) which can be located over the clamp member (1), wherein the clamp member (1) includes a base plate (3) and at least one pair of clamping portions (4) which cooperate with each other for clamping a pipe (15) which is insertable between said clamping portions (4) and locking said pipe (15) to said support, wherein the clamping portions (4) are designed pivotable in a direction away (5a) from each other by the pipe (15) during the insertion thereof between the clamping portions (4) and, after the insertion of the pipe (15), pivotable in a direction back (5b) towards the original position for clamping the pipe (15) therebetween, wherein the clamping portions (4) are provided at the base plate (3) offset relative to each other seen in a direction substantially perpendicular to the pivoting direction of the clamping portions (4), and wherein the clamping portions (4) are provided at the base plate (3) with fastening portions or parts of fastening portions (6) therefore located substantially opposite to each other seen in a direction substantially perpendicular to the pivoting direction of the clamping portions (4), **characterized in**
**that** the fastening portions (6) for the clamping portions (4) are each located at an edge of a recess (7) in the base plate (3) in order to facilitate pivoting of the clamping portions (4) in a direction away (5a) from each other by deflection downwards into said recesses (7), and
**that** an end portion (8) for each clamping portion (4) is designed to cooperate with a wall portion (14) of the lock or cover member (12) when said lock or cover member (12) is located over the clamp member (1) in order to prevent pivoting of the clamping portions (4) in a direction away (5a) from each other.

2. Pipe clamp according to claim 1, **characterized in**
**that** said end portion (8) for each clamping portion (4) is provided between the clamping portion (4) and the fastening portion (6) and interconnect said portions and extend substantially in parallel with the base plate (3) such that said end portion (8), when pivoting the clamping portions (4) in a direction away (5a) from each other, moves in a direction upwards from the base plate (3), and
**that** said wall portion (14) of the lock and cover member (12), when locating said lock and cover member (12) over the clamp member (1), prevents said end portion (8) to the clamping portion (4) from moving in a direction upwards from the base plate (3).

3. Pipe clamp according to claim 1 or 2, **characterized in that** the clamp member (1) includes two pairs of clamping portions (4) for clamping a pipe (15) between each pair of clamping portions (4).

4. Pipe clamp according to claim 3. **characterized in that** a mounting portion (9) for a mounting means for mounting the clamp member (1) on a support is provided on the base plate (3) between the two pairs of clamping portions (4).

5. Pipe clamp according to any one of the preceding claims, **characterized in that** the clamp member (1) includes locking means (10) which cooperate with locking means (11) on the lock and cover member (12) for location of the lock and cover member (12) over the clamp member (1).

6. Pipe clamp according to claim 5, **characterized in**
**that** the base plate (3) has four sides, and
**that** the locking means (10) on the clamp member (1) are provided on two opposite sides of the base plate (3) and on at least one side of the mounting portion (9) for a mounting means on the base plate (3).

## Patentansprüche

1. Rohrschelle, aufweisend ein Klemmelement (1), das dafür geeignet ist, an einem Träger angebracht zu werden, sowie ein Verriegelungs- oder Abdeckelement (12), das über dem Klemmelement (1) angeordnet werden kann, wobei das Klemmelement (1) eine Basisplatte (3) und mindestens ein Paar Klemmbereiche (4) aufweist, die miteinander zusammenwirken, um ein zwischen die Klemmbereiche (4) einsetzbares Rohr (15) einzuklemmen und das Rohr (15) an dem Träger zu verriegeln, wobei die Klemmbereiche (4) während des Einsetzens des Rohrs (15) zwischen die Klemmbereiche (4) in Richtung voneinander weg (5a) schwenkbar ausgebildet sind und nach dem Einsetzen des Rohrs (15) in Richtung auf die ursprüngliche Position zurück (5b) schwenkbar sind, um das Rohr (15) dazwischen einzuklemmen, wobei die Klemmbereiche (4) an der Basisplatte (3) in einer zu der Schwenkrichtung der Klemmbereiche (4) im Wesentlichen rechtwinkligen Richtung relativ zueinander versetzt sind und wobei die Klemmbereiche (4) an der Basisplatte (3) mit Befestigungsbereichen oder Teilen von Befestigungsbereichen (6) versehen sind, die somit in einer zu der Schwenkrichtung der Klemmbereiche (4) im Wesentlichen rechtwinkligen Richtung im Wesentlichen einander gegenüberliegend angeordnet sind, **dadurch gekennzeichnet,**
**dass** sich die Befestigungsbereiche (6) für die Klemmbereiche (4) jeweils an einem Rand einer Aussparung (7) in der Basisplatte (3) befinden, um das Verschwenken der Klemmbereiche (4) in einer Richtung voneinander weg (5a) durch Biegen von diesen nach unten in die Aussparungen (7) hinein zu erleichtern, und
**dass** ein Endbereich (8) für jeden Klemmbereich (4) zum Zusammenwirken mit einem Wandbereich (14) des Verriegelungs- oder Abdeckelement (12) ausgebildet ist, wenn sich das Verriegelungs- oder Abdeckelement (12) über dem Klemmelement (1) befindet, um ein Verschwenken der Klemmbereiche (4) in Richtung voneinander weg (5a) zu verhindern.

2. Rohrschelle nach Anspruch 1, **dadurch gekennzeichnet,**
**dass** der Endbereich (8) für jeden Klemmbereich (4) zwischen dem Klemmbereich (4) und dem Befestigungsbereich (6) vorgesehen ist und die Bereiche miteinander verbindet und sich im Wesentlichen parallel zu der Basisplatte (3) erstreckt, so dass sich der Endbereich (8) beim Verschwenken der Klemmbereiche (4) in Richtung voneinander weg (5a) in Richtung nach oben von der Basisplatte (3) bewegt, und dass der Wandbereich (14) des Verriegelungs- und Abdeckelements (12) bei Anordnung des Verriegelungs- und Abdeckelements (12) über dem Klemmelement (1) den Endbereich (8) an dem Klemmbereich (4) daran hindert, sich in Richtung von der Basisplatte (3) nach oben zu bewegen.

3. Rohrschelle nach Anspruch 1 oder 2, **dadurch gekennzeichnet,**
**dass** das Klemmelement (1) zwei Paare von Klemmbereichen (4) zum Einklemmen eines Rohrs (15) zwischen einem jeweiligen Paar von Klemmbereichen (4) aufweist.

4. Rohrschelle nach Anspruch 3, **dadurch gekennzeichnet,**
**dass** ein Montagebereich (9) für eine Montageeinrichtung zum Montieren des Klemmelements (1) an einem Träger an der Basisplatte (3) zwischen den beiden Paaren von Klemmbereichen (4) vorgesehen ist.

5. Rohrschelle nach einem der vorhergehenden Ansprüche, **dadurch gekennzeichnet,**
**dass** das Klemmelement (1) Verriegelungseinrichtungen (10) aufweist, die mit Verriegelungseinrichtungen (11) an dem Verriegelungs- und Abdeckelement (12) zusammenwirken, um das Verriegelungs- und Abdeckelement (12) über dem Klemmelement (1) festzulegen.

6. Rohrschelle nach Anspruch 5, **dadurch gekennzeichnet,**
**dass** die Basisplatte (3) vier Seiten aufweist, und
**dass** die Verriegelungseinrichtungen (10) an dem Klemmelement (1) auf zwei gegenüberliegenden Seiten der Basisplatte (3) und auf mindestens einer Seite des Befestigungsbereichs (9) für eine Befestigungseinrichtung an der Basisplatte (3) vorgesehen sind.

## Revendications

1. Bride d'attache pour tuyaux, comprenant une partie de serrage (1) apte à être montée sur un support, et une partie (12) de verrouillage ou de recouvrement pouvant être placée au-dessus de ladite partie de serrage (1), laquelle partie de serrage (1) comporte une platine d'embase (3) et au moins une paire de zones de serrage (4) qui sont en coopération mutuelle pour coincer un tuyau (15), pouvant être inséré entre lesdites zones de serrage (4), et pour verrouiller ledit tuyau (15) sur ledit support, lesdites zones de serrage (4) étant réalisées pour pouvoir pivoter dans une direction d'éloignement réciproque (5a) sous l'action du tuyau (15), lors de l'insertion de ce dernier entre lesdites zones de serrage (4), et pour pouvoir pivoter dans une direction rétrograde (5b) vers la position initiale, à l'issue de l'insertion dudit tuyau (15), afin de coincer ledit tuyau (15) entre elles, lesdites zones de serrage (4) étant ménagées, sur la platine d'embase (3), avec décalage mutuel observées dans une direction substantiellement perpendiculaire à la direction de pivotement desdites zones de serrage (4), et lesdites zones de serrage (4) étant pourvues, sur ladite platine d'embase (3), de régions de fixation ou de parties de régions de fixation (6) adéquatement agencées pour pointer substantiellement à l'opposé les unes des autres, observées dans une direction substantiellement perpendiculaire à la direction de pivotement desdites zones de serrage (4), **caractérisée par le fait**
**que** les régions de fixation (6) dévolues aux zones de serrage (4) sont situées chacune sur un bord d'un évidement (7) pratiqué dans la platine d'embase (3), afin de promouvoir un pivotement desdites zones de serrage (4) dans une direction d'éloignement réciproque (5a), par flexion vers le bas les faisant pénétrer dans lesdits évidements (7), et
**qu'**une région extrême (8) affectée à chaque zone de serrage (4) est conçue pour coopérer avec une région de cloisonnement (14) de la partie (12) de verrouillage ou de recouvrement, lorsque ladite partie (12) de verrouillage ou de recouvrement se trouve au-dessus de la partie de serrage (1), de manière à empêcher un pivotement des zones de serrage (4) dans une direction d'éloignement réciproque (5a).

2. Bride d'attache pour tuyaux, selon la revendication 1, **caractérisée par le fait**
**que** ladite région extrême (8), affectée à chaque zone de serrage (4), est prévue entre ladite zone de serrage (4) et la région de fixation (6), relie ces dernières entre elles et s'étend, pour l'essentiel, parallèlement à la platine d'embase (3) de façon telle que, lors d'un pivotement des zones de serrage (4) dans une direction d'éloignement réciproque (5a), ladite région extrême (8) effectue un mouvement dans une direction ascendante à partir de ladite platine d'embase (3), et
**que**, lors de la mise en place de ladite partie (12) de verrouillage et de recouvrement au-dessus de la partie de serrage (1), ladite région de cloisonnement (14) de ladite partie (12) de verrouillage et de recouvrement empêche ladite région extrême (8) de la zone de serrage (4) d'accomplir un mouvement dans une direction ascendante, à partir de ladite platine d'embase (3).

3. Bride d'attache pour tuyaux, selon la revendication 1 ou 2, **caractérisée par le fait que** la partie de serrage (1) compte deux paires de zones de serrage (4), pour coincer un tuyau (15) entre chaque paire de zones de serrage (4).

4. Bride d'attache pour tuyaux, selon la revendication 3, **caractérisée par le fait qu'**une zone de montage (9), destinée à un moyen de montage dédié au montage de la partie de serrage (1) sur un support, est prévue sur la platine d'embase (3) entre les deux paires de zones de serrage (4).

5. Bride d'attache pour tuyaux, selon l'une quelconque des revendications précédentes, **caractérisée par le fait que** la partie de serrage (1) offre des moyens de verrouillage (10) qui coopèrent avec des moyens de verrouillage (11), sur la partie (12) de verrouillage et de recouvrement, en vue de la mise en place de ladite partie (12) de verrouillage et de recouvrement au-dessus de ladite partie de serrage (1).

6. Bride d'attache pour tuyaux, selon la revendication 5, **caractérisée par le fait**
**que** la platine d'embase (3) présente quatre côtés, et
**que** les moyens de verrouillage (10), situés sur la partie de serrage (1), sont prévus sur deux côtés opposés de ladite platine d'embase (3) et sur au moins l'un des côtés de la zone de montage (9) destinée à un moyen de montage, et située sur ladite platine d'embase (3).
